# EUROPÄISCHE PATENTSCHRIFT

(11) **EP 2 923 264 B1**
(45) Veröffentlichungstag und Bekanntmachung des Hinweises auf die Patenterteilung: **23.03.2022**
(21) Anmeldenummer: 13796003.5
(22) Anmeldetag: 20.11.2013
(51) Int. Cl.: G06F 8/61, G06Q 20/34

(54) **VERFAHREN UND SYSTEM ZUR APPLIKATIONSINSTALLATION IN EINEM SICHERHEITSELEMENT**
METHOD AND SYSTEM FOR APPLICATION INSTALLATION IN A SECURITY ELEMENT
PROCEDE ET SYSTEME POUR L'INSTALLATION D'APPLICATION DANS UN ÉLÉMENT DE SÉCURITÉ

(30) Priorität: 22.11.2012 DE 102012022875
(43) Veröffentlichungstag der Anmeldung: 30.09.2015
(73) Patentinhaber: Giesecke+Devrient Mobile Security GmbH, 81677 München (DE)
(72) Erfinder: WEISS, Dieter, 81825 München (DE)
(74) Vertreter: Giesecke + Devrient IP
(86) Internationale Anmeldenummer: PCT/EP2013/003501
(87) Internationale Veröffentlichungsnummer: WO 2014/079564

(56) Entgegenhaltungen:
- EP-A1- 1 703 382
- EP-A2- 1 536 654
- EP-A2- 2 333 700
- RAJA NAEEM AKRAM ET AL: "Application Management Framework in User Centric Smart Card Ownership Model", 25. August 2009 (2009-08-25), INFORMATION SECURITY APPLICATIONS, SPRINGER BERLIN HEIDELBERG, BERLIN, HEIDELBERG, PAGE(S) 20 - 35, XP019136006, ISBN: 978-3-642-10837-2 Section 4. Application Management Processes, Figures 3 and 4
- 2: "GlobalPlatform Card Specification. Version 2.2.1", , 1. Januar 2011 (2011-01-01), Seiten 1-303, XP055098338, Gefunden im Internet: URL:http://www.globalplatform.org/ [gefunden am 2014-01-24]

## Beschreibung

Die vorliegende Erfindung betrifft ein Verfahren zur Installation einer Applikation in einem Sicherheitselement eines portablen Endgeräts, eine entsprechende Installationseinrichtung, ein entsprechendes Sicherheitselement sowie ein System, umfassend zumindest eine Installationseinrichtung und zumindest ein Endgerät mit zumindest einem Sicherheitselement.

Die Funktionalität portabler Endgeräte, wie beispielsweise von Mobilfunkendgeräten, Smartphones, Tablets und dergleichen, kann durch die Installation von Softwarefunktionalitäten, so genannten Applets oder "Apps", in bekannter Weise erweitert werden. Verschiedene dieser Applets dienen dabei Anwendungen, die auch sicherheitsrelevante Daten umfassen und/oder verarbeiten. Sicherheitsrelevante Daten können dabei beispielsweise geheim zu haltende persönliche Daten eines Nutzers des Endgeräts sein, wie zum Beispiel biometrische Daten, oder Daten, welche zur Abwicklung finanzieller Transaktionen verwendet werden, wie beispielsweise Kreditkartennummer, Kontodaten, Inhalt elektronischer Börsen, kryptographische Schlüssel, etc.

Es ist dabei bekannt, Applikationen, insbesondere solche, die sicherheitsrelevante Daten verarbeiten, vor Manipulation und unberechtigtem Zugriff dadurch zu schützen, dass diese Applikationen in einem besonders gesicherten Bereich des Endgeräts gespeichert bzw. installiert und ausgeführt werden.

Geeignete gesicherte Bereiche stellen insbesondere in ein Endgerät integrierbare oder darin fest eingebaute Sicherheitselemente dar. Entfernbar integrierbare Sicherheitselemente sind beispielsweise SIM/UICC-Mobilfunckarten, sichere Multimediakarten oder dergleichen. Als fest in das Endgerät eingebaute Sicherheitselemente können beispielsweise embedded-SIM/ UICC-Mobilfunkkarten, TPMs ("Trusted Platform Moduls") oder NFC-Module dienen. Schließlich können auch sichere Ausführungsumgebungen innerhalb einer spezifischen Hardwarearchitektur des Endgeräts, beispielsweise innerhalb einer ARM TrustZone-Architektur, als Sicherheitselemente dienen, wie beispielsweise ein "Trusted Execution Environment" gemäß der "Global Platform" -Spezifikation.

Zu beachten ist, dass ein Sicherheitselement der oben beschriebenen Art eine Mehrzahl von gesicherten Bereichen umfassen kann. D.h. dass beispielsweise eine SIM-Karte als physisches Sicherheitselement eine Mehrzahl von gesicherten Bereichen in einem Speicher der Karte umfassen kann. Insbesondere können diese gesicherten Bereiche als so genannte "Security Domains" gemäß der GlobalPlatform-Spezifikation vorliegen (vgl. z.B. Global Platform, Card Specification, Version 2.2). Eine solche "Security Domain" ist in der Regel einer vorgegebenen externen Instanz zugeordnet, beispielsweise dem Herausgeber des Datenträgers, einem Netzbetreiber, einem Applikationsanbieter oder dergleichen. Diese Instanz wird dann im Folgenden auch als "Besitzer" der "Security Domain" bezeichnet. In analoger Weise wird im Folgenden auch von einem "Besitzer" eines Sicherheitselements gesprochen, wenn diejenige Instanz bezeichnet werden soll, der das Sicherheitselement zugeordnet ist. Der Besitzer des Sicherheitselements ist insbesondere für die Schlüsselarchitektur des Sicherheitselements verantwortlich. "Security Domains" können auf einem physischen Sicherheitselement in hierarchisch angeordneter Weise vorliegen, wobei ein Besitzer einer privilegierten "Security Domain" weitere, hierarchisch abhängige "Security Domains" für gegebenenfalls andere Besitzer anlegen kann, samt zugehöriger Schlüsselarchitektur.

Das Installieren von Applikationen in ein Sicherheitselement ist in der Regel kryptographisch gesichert. Zunehmend wird eine solche Installation insbesondere sicherheitsrelevanter Applikationen in einem Sicherheitselement eines portablen Endgeräts mit der Hilfe vertrauenswürdiger Installationseinrichtungen, so genannter "Trusted Service Manager" (im Folgenden als TSM bezeichnet), durchgeführt. Diese nehmen als Dienstleister die zu installierende Applikation entgegen und führen den Installationsprozess, d.h. das gesicherte Installieren der Applikation in dem Sicherheitselement, selbstständig durch. Im Folgenden wird in diesem Zusammenhang die Formulierung verwendet, wonach der TSM das Sicherheitselement "verwaltet". Vor dem Schritt des Installierens werden in der Regel kryptographische Schlüssel zwischen dem TSM und der die Applikation bereitstellenden Institution, beispielsweise einer Bank im Falle einer zu personalisierenden Bezahlapplikation, ausgetauscht und in das Sicherheitselement in gesicherter Weise eingebracht. Mittels dieser Schlüssel kann der Installationsprozess kryptographisch gesichert werden.

In der Praxis haben sich die beschriebene Vorgehensweise und das beschriebene System teilweise als nachteilig herausgestellt. Dies liegt zum einen daran, dass eine Vielzahl von Installationseinrichtungen, insbesondere TSMs, am Markt angetreten ist. Es wird für einen Applikationsanbieter daher zunehmend schwierig, denjenigen TSM zu ermitteln, welcher ein vorgegebenes Sicherheitselement jeweils verwaltet. Weiter scheitern Installationsaufträge zunehmend daran, dass verschiedene Hersteller und/oder Herausgeber von Sicherheitselementen teils proprietäre Kommunikationsprotokolle zur Kommunikation mit den entsprechenden Sicherheitselementen vorsehen, welche einzelnen Installationseinrichtungen dann nicht bekannt sind. Schließlich ist das herkömmliche System starr und bietet Sicherheitselementen keine Einflussnahme auf den Installationsprozess.

Zur Ablage von durch ein Mobilfunkgerät empfangenen Anwendungen wird in EP 1536654 A2 eine externe Speichereinheit verwendet. Der Artikel "Application Management Framework in User Centric Smart Card Ownership Model" stellt ein System vor, in welchem der Benutzer mit Hilfe entsprechender Management-Software seine Karte selbst verwaltet. In EP 1703382 A1 löst eine Anfrage der Karte an einen Server eine Prüfung aus, ob neue Applikationen für diese Karte vorliegen.

Aufgabe der vorliegenden Erfindung ist es, ein Verfahren und ein System vorzuschlagen, welche den vorstehend erwähnten Nachteilen Rechnung tragen und das Installieren einer Applikation in einem Sicherheitselement eines Endgeräts in flexibler und variabler Weise erlauben.

Diese Aufgabe wird durch ein Verfahren, ein Sicherheitselement, eine Installationseinrichtung sowie ein System mit den Merkmalen der unabhängigen Ansprüche 1 und 8 gelöst. Vorteilhafte Ausgestaltungen und Weiterbildungen sind in den abhängigen Ansprüchen angegeben.

Ein erfindungsgemäßes Verfahren zum Installieren einer Applikation in einem Sicherheitselement eines portablen Endgeräts umfasst die folgenden Schritte: Die Installationseinrichtung empfängt einen Installationsauftrag zum Installieren einer vorgegebenen Applikation auf einem vorgegebenen Sicherheitselement. Diesen Auftrag bearbeitet die Installationseinrichtung in nachfolgend noch beschriebener Weise. Erfindungsgemäß empfängt die Installationseinrichtung den Installationsauftrag von dem vorgegebenen Sicherheitselement selbst oder von einem von dem vorgegebenen Sicherheitselement verschiedenen, weiteren Sicherheitselement. Das weitere Sicherheitselement kann dabei ein Sicherheitselement sein, welches auf demselben Endgerät angeordnet ist, wie das vorgegebene Sicherheitselement, oder aber auf einem weiteren Endgerät.

Entsprechend umfasst eine erfindungsgemäße Installationseinrichtung zum Installieren einer Applikation auf einem Sicherheitselement eines portablen Endgeräts eine Installationsauftragsannahmeeinrichtung zum Entgegennehmen eines Installationsauftrags zur Installation einer vorgegebenen Applikation auf einem vorgegebenen Sicherheitselement, eine Einrichtung zum Durchführen oder Initiieren einer Installation einer Applikation auf einem Sicherheitselement und eine Installationsbearbeitungseinrichtung, die eingerichtet ist, einen entgegengenommenen Installationsauftrag zu bearbeiten. Erfindungsgemäß ist die Installationsauftragsannahmeeinrichtung eingerichtet, einen Installationsauftrag auch von einem Sicherheitselement entgegenzunehmen.

Schließlich umfasst ein erfindungsgemäßes Sicherheitselement für ein portables Endgerät eine Annahmeeinrichtung zum Empfangen einer auf dem Sicherheitselement zu installierenden Applikation von einer Installationseinrichtung. Weiter umfasst das Sicherheitselement erfindungsgemäß eine Installationsauftragserteilungseinrichtung, welche eingerichtet ist, einen Installationsauftrag zum Installieren einer Applikation auf dem Sicherheitselement selbst oder auf einem von dem Sicherheitselement verschiedenen, weiteren Sicherheitselement an eine Installationseinrichtung zu richten.

Auf diese Weise kann ein Installationsprozess gemäß dem Stand der Technik dahingehend erweitert werden, dass auch ein Sicherheitselement selbst als Auftraggeber eines Installationsprozesses auftreten kann. Bisher war diese Rolle anderen Instanzen vorhalten, insbesondere einem Hersteller oder Herausgeber des Sicherheitselements oder einem von einer solchen beauftragten und dadurch indirekt berechtigten Dritten, wie beispielsweise ein Applikationsanbieter .

Dabei kann der Installationsauftrag zum einen eine Installation einer Applikation auf dem den Auftrag gebenden Sicherheitselement selbst betreffen. Hierzu kann beispielsweise ein Applikationsanbieter, welchem ein das Sicherheitselement verwaltender TSM nicht bekannt ist, eine auf dem Sicherheitselement zu installierende Applikation direkt an das Sicherheitselement übertragen, welches dann, in Kenntnis des verwaltenden TSMs, den entsprechenden Installationsauftrag an den TSM richtet. Weiter kann ein Sicherheitselement beispielsweise die Installation einer Applikation, welche bisher auf dem Sicherheitselement nur in Form interpretierbaren Programmcodes vorliegt, in Form von auf das Sicherheitselement zugeschnittenem Maschinencode bei einer dazu geeigneten Installationseinrichtung in Auftrag geben.

Ein von einem Sicherheitselement an eine Installationseinrichtung gerichteter Installationsauftrag kann aber auch die Installation einer vorgegebenen Applikation in einem von dem Sicherheitselement verschiedenen, weiteren Sicherheitselement betreffen. Alternativ kann der Auftrag aber auch ein Sicherheitselement auf einem anderen Endgerät betreffen, beispielsweise um - beauftragt durch das Sicherheitselement - eine Kopie des Sicherheitselements herzustellen.

Vielfältige, weitere Szenarien sind vorstellbar, in welchen die erfindungsgemäße Vorgehensweise der durch das Sicherheitselement initiierten Erteilung eines Installationsauftrags an eine Installationseinrichtung vorteilhaft eingesetzt werden kann.

Gemäß einer bevorzugten Ausführungsform umfasst die Installationsauftragserteilungseinrichtung des Sicherheitselements eine erste und eine zweite Auftragserteilungseinrichtung.

Die erste Auftragserteilungseinrichtung ist eingerichtet, einen Installationsauftrag gemäß einem ersten, vorzugsweise internetbasierten Kommunikationsprotokoll an die Installationseinrichtung zu richten. Das erste Kommunikationsprotokoll kann beispielsweise einem Protokoll entsprechen, gemäß dem bisher ein Auftraggeber, beispielsweise ein Hersteller oder Herausgeber eines Sicherheitselements, einen Installationsauftrag an eine herkömmliche Installationseinrichtung gerichtet hat. Dementsprechend kann ein erfindungsgemäßes Sicherheitselement gemäß dieser Ausführungsform nun einen Installationsauftrag auch an Installationseinrichtungen richten, welche noch nicht erfindungsgemäß erweitert worden sind. Mit anderen Worten, das erste Kommunikationsprotokoll repräsentiert in der Regel eine Standardschnittstelle zwischen einer Installationseinrichtung und einem Auftraggeber eines Installationsauftrags.

Die zweite Auftragserteilungseinrichtung des Sicherheitselements hingegen ist eingerichtet, einen Installationsauftrag gemäß einem zweiten, von dem ersten Kommunikationsprotokoll verschiedenen Kommunikationsprotokoll an eine entsprechend eingerichtete Installationseinrichtung zu richten. Das zweite Kommunikationsprotokoll ist dabei vorzugsweise als ein Chipkarten-Kommunikationsprotokoll ausgebildet. Dieses Protokoll kann insbesondere auch proprietär ausgebildet sein.

Das zweite Kommunikationsprotokoll kann vorteilhaft eingesetzt werden, wenn der Installationsauftrag an eine Installationseinrichtung gemäß einer entsprechenden, vorteilhaften Ausführungsform der Erfindung gerichtet werden soll.

Die Installationsauftragsannahmeeinrichtung einer solchen Installationseinrichtung umfasst eine erste und eine zweite Auftragsannahmeeinrichtung. Die erste Auftragsannahmeeinrichtung ist dabei eingerichtet, Installationsaufträge gemäß dem ersten, vorzugsweise internetbasierten Kommunikationsprotokoll entgegenzunehmen. Dementsprechend kann die Installationseinrichtung, wie angedeutet, unverändert Installationsaufträge in der herkömmlichen Weise entgegennehmen, nicht nur von einem Sicherheitselement, sondern auch von denjenigen Instanzen, die herkömmlich als Auftraggeber auftreten.

Die zweite Auftragsannahmeeinrichtung hingegen ist eingerichtet, Installationsaufträge gemäß einem zweiten Kommunikationsprotokoll entgegenzunehmen, wobei das zweite Kommunikationsprotokoll vorzugsweise als ein Chipkarten-Kommunikationsprotokoll ausgebildet ist. Dieses zweite Kommunikationsprotokoll kann nun in vorteilhafter Weise dem zweiten Kommunikationsprotokoll entsprechen, welches von einem erfindungsgemäßen Sicherheitselement unterstützt wird. Auf diese Weise kann die Installationseinrichtung angepasst werden, Installationsaufträge entsprechend eingerichteter Sicherheitselemente in an das Sicherheitselement angepasster Weise, über ein Chipkarten-Kommunikationsprotokoll, entgegenzunehmen.

Ein Sicherheitselement, dessen Installationsauftragserteilungseinrichtung sowohl die erste als auch die zweite Auftragserteilungseinrichtung umfasst, kann sich somit mit einem Installationsauftrag als "herkömmlicher" Auftraggeber, über das erste Kommunikationsprotokoll, an eine herkömmliche oder erfindungsgemäß erweiterte Installationseinrichtung wenden oder aber, über das zweite Kommunikationsprotokoll, explizit in der Rolle eines Sicherheitselements, eine erfindungsgemäß erweiterte Installationseinrichtung ansprechen.

Es versteht sich, dass eine Installationsauftragserteilungseinrichtung eines Sicherheitselements auch lediglich nur die erste Auftragserteilungseinrichtung oder nur die zweite Auftragserteilungseinrichtung umfassen kann.

In analoger Weise kann eine Installationsauftragsannahmeeinrichtung einer Installationseinrichtung auch lediglich nur die erste oder nur die zweite Auftragsannahmeeinrichtung umfassen.

Ihm Rahmen des erfindungsgemäßen Verfahrens wirkt die Installationseinrichtung im Schritt des Bearbeitens des Installationsauftrags mit einer weiteren Installationseinrichtung zusammen.

Gemäß dem Stand der Technik war an einem Installationsprozess der zugrunde liegenden Art jeweils nur eine Installationseinrichtung beteiligt. Dies ist besonders dann nachteilhaft, wenn diese eine Installationseinrichtung aus einem bestimmten Grund den Installationsprozess nicht alleine durchführen kann. Gründe können beispielsweise sein, dass die Installationseinrichtung das von dem Sicherheitselement zur Datenkommunikation verwendete, gegebenenfalls proprietäre Kommunikationsprotokoll nicht unterstützt, dass der Installationseinrichtung die zur Installation notwendigen kryptographischen Schlüssel nicht vorliegen oder dass die Installationseinrichtung nicht über Compiler- und/oder Linkerfunktionalitäten verfügt, welche notwendig sind, um eine gemäß Installationsauftrag an das Sicherheitselement angepasste Applikation in Maschinencode zu erzeugen. Vielfältige weitere Gründe sind denkbar. Mittels eines gezielten Zusammenwirkens verschiedener Installationseinrichtungen im Rahmen eines Installationsprozesses werden viele dieser Schwierigkeiten behoben .

Gemäss der vorgeschlagenen Erfindung leitet die Installationseinrichtung den Installationsauftrag im Schritt des Bearbeitens an eine weitere Installationseinrichtung weiter.

Dazu umfasst die Bearbeitungseinrichtung eine Weiterleitungseinrichtung, die eingerichtet ist, einen entgegengenommenen Installationsauftrag an die weitere Installationseinrichtung weiterzuleiten. Dies ist immer dann sinnvoll, wenn davon ausgegangen werden kann, dass die weitere Installationseinrichtung eingerichtet und in der Lage ist, den Installationsauftrag auszuführen, d.h. die vorgegebene Applikation in dem vorgegebenen Sicherheitselement zu installieren.

Gemäß einer bevorzugten Ausführungsform dieser Variante unterstützt auch die Weiterleitungseinrichtung das vorstehend erwähnte erste und zweite Kommunikationsprotokoll, welches von einem erfindungsgemäßen Sicherheitselement verwendet werden kann, um einen Installationsauftrag an eine Installationseinrichtung zu richten. Auf diese Weise kann die Weiterleitungseinrichtung den Auftrag in unveränderter Form weitergeben. Insbesondere dann, wenn sich das Sicherheitselement "als Sicherheitselement", d.h. gemäß dem zweiten Kommunikationsprotokoll, an die Installationseinrichtung wendet, sollte die Weiterleitungseinrichtung den Auftrag in entsprechender Weise in der Rolle eines Sicherheitselements, d.h. gemäß dem zweiten Kommunikationsprotokoll, an die weitere Installationseinrichtung weiterleiten. Auf diese Weise kann eine gegebenenfalls unterschiedliche Bearbeitung von Installationsaufträgen, welche über das erste bzw. das zweite Kommunikationsprotokoll empfangen werden, gewährleistet bleiben, beispielsweise hinsichtlich einer Priorität in einer Bearbeitungsreihenfolge oder dergleichen.

Gemäß einer zweiten Variante kann die Installationseinrichtung im Schritt des Bearbeitens beispielsweise eine Installationsberechtigung zum Durchführen des Installationsauftrags bei der weiteren Installationseinrichtung anfordern, beispielsweise in Form von zur Installation notwendigen kryptographischen Schlüsseln. Dazu umfasst die Bearbeitungseinrichtung eine Installationsberechtigungsanforderungseinrichtung. Diese ist eingerichtet, zum Durchführen des entgegengenommenen Installationsauftrags bei der weiteren Installationseinrichtung eine Installationsberechtigung anzufordern. In Beantwortung dieser Anforderung kann die weitere Installationseinrichtung beispielsweise der anfordernden Installationseinrichtung die betreffenden Schlüssel bereitstellen. Alternativ und bevorzugt kann die weitere Installationseinrichtung, beispielweise in der Rolle der Besitzerin einer privilegierten "Security Domain", für die anfordernde Installationseinrichtung eine abgeleitete "Security Domain" einrichten und die dazugehörigen kryptographischen Schlüssel übermitteln. Die anfordernde Installationseinrichtung erlangt dadurch eine Installationsberechtigung zur Installation der vorgegebenen Applikation in der eigens dafür eingerichteten "Security Domain".

Gemäß einer dritten Variante kann die Installationseinrichtung bei der weiteren Installationseinrichtung Compiler/Linkerfunktionalitäten zum Erzeugen einer auf das Sicherheitselement zugeschnittenen Applikation in Maschinencode anfordern. Alternativ könnte auch die weitere Installationseinrichtung, auf der Basis von von dem Sicherheitselement abgefragten oder durch das Sicherheitselement bereitgestellten Informationen, insbesondere hinsichtlich der Hard- und Softwareausstattung des Sicherheitselements, die Applikation in Maschinencode erzeugen und Installationseinrichtung zur Installation bereitstellen.

In der Regel wird die Installationseinrichtung einen empfangenen Installationsauftrag vor dem Schritt des Bearbeitens dahingehend prüfen, ob sie den Auftrag ohne ein Zusammenwirken mit einer weiteren Installationseinrichtung ausführen kann oder nicht. Sollte letzteres der Fall sein, bestimmt die Installationseinrichtung mittels einer Bestimmungseinrichtung eine zum Zusammenwirken beim Bearbeiten geeignete, weitere Installationseinrichtung. Dazu kann die Bestimmungseinrichtung auf in dem Sicherheitselement gespeicherte, nachfolgend erläuterte Informationen zurückgreifen. Alternativ kann eine zentrale Stelle im System vorgesehen sein, auf welche dem System angeschlossene Installationseinrichtungen zugreifen können, und welche entsprechende Bestimmungsinformationen umfasst.

Wie bereits angedeutet, kann im Rahmen des Verfahrens ein weiterer Installationsauftrag von der Installationseinrichtung auch auf "herkömmliche" Weise, d.h. von einem Hersteller des Sicherheitselements oder einem Herausgeber des Sicherheitselements oder einem berechtigten Dritten empfangen werden. Auch ein solcher Auftrag kann, wie vorstehend beschrieben, unter Zusammenwirkung verschiedener Installationseinrichtungen bearbeitet werden.

Jede erfindungsgemäße Installationseinrichtung umfasst, wie erwähnt, eine Einrichtung zum Durchführen oder Initiieren einer Installation einer Applikation auf einem Sicherheitselement. Mit anderen Worten, jedes erfindungsgemäße Installationsverfahren wird dadurch abgeschlossen, dass die vorgegebene Applikation in dem vorgegebenen Sicherheitselement installiert wird bzw. in durch das Sicherheitselement selbst installierbarer Form an das Sicherheitselement übertragen wird. Verschiedene Installationseinrichtungen können dabei voneinander abweichende Einrichtungen zum Durchführen oder Initiieren einer Installation umfassen. Insbesondere können einzelne dieser Einrichtungen in besonderer Weise an bestimmte Sicherheitselemente angepasst sein, beispielsweise hinsichtlich eines von den jeweiligen Sicherheitselementen zur Datenkommunikation jeweils vorgegebenen, gegebenenfalls proprietären Kommunikationsprotokolls.

Ein erfindungsgemäßes Sicherheitselement kann eine Bestimmungstabelle umfassen. Diese gibt an, welche Installationseinrichtung eine Installation einer vorgegebenen Applikation auf dem Sicherheitselement durchführen kann. Weiter gibt die Tabelle an, mit welcher weiteren Installationseinrichtung die erste Installationseinrichtung zusammenwirken kann, um eine Installation einer vorgegebenen Applikation auf dem Sicherheitselement zu bewirken. Anhand der Bestimmungstabelle kann das Sicherheitselement eine Installationseinrichtung bestimmen, an die ein Installationsauftrag gerichtet wird. Teil des Installationsauftrags kann die Information über eine zum Zusammenwirken geeignete, weitere Installationseinrichtung sein.

Weiter kann eine vorstehend beschriebene Bestimmungseinrichtung einer Installationseinrichtung im Rahmen eines Installationsverfahrens auf die Bestimmungstabelle des Sicherheitselements zugreifen, um eine weitere Installationseinrichtung zum Zusammenwirken zu bestimmen. Eine entsprechende Information kann alternativ oder zusätzlich, wie erwähnt, auch in einer zentralen Datenbank oder dergleichen, die allen dem erfindungsgemäßen System zugehörigen Installationseinrichtungen zugänglich ist, gespeichert sein.

Die vorliegende Erfindung wird im Folgenden mit Bezug auf die beiliegenden Zeichnungen beispielhaft beschrieben. Darin zeigen:
- Figur 1: ein Endgerät mit einer Mehrzahl von Sicherheitselementen gemäß einer bevorzugten Ausführungsform der Erfindung;
- Figur 2: eine bevorzugte Ausführungsform einer erfindungsgemäßen Installationseinrichtung und
- Figur 3: verschiedene Komponenten einer bevorzugten Ausführungsform eines erfindungsgemäßen Systems im Rahmen zweier bevorzugter Ausführungsformen eines erfindungsgemäßen Verfahrens.

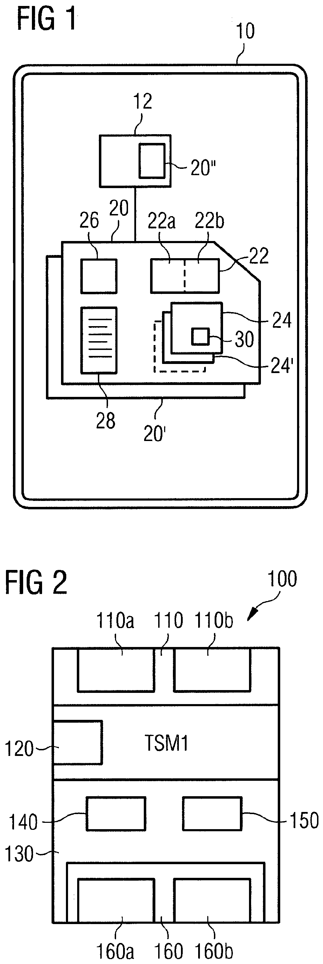

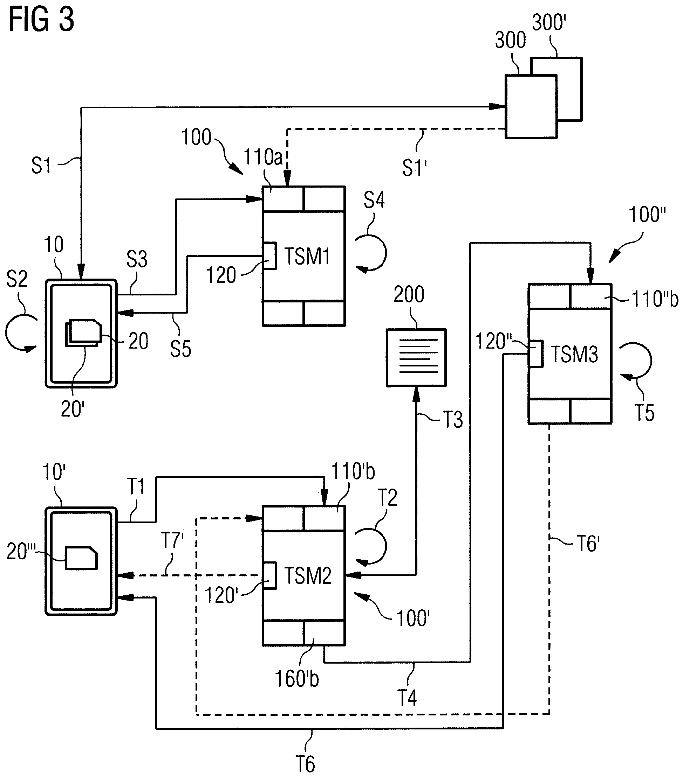

In Fig. 1 ist ein Endgerät 10 in Form eines Smartphones gezeigt. Das Endgerät 10 ist in bekannter Weise eingerichtet, beispielsweise über ein Mobilfunknetz, mit einer Installationseinrichtung TSM1, TSM2, TSM3 und/oder einer weiteren Instanz, beispielsweise mit einem Applikationsanbieter 300, beispielsweise über das Internet, verbunden zu werden (vgl. Fig. 3). Das Endgerät 10 kann alternativ zum Beispiel auch als Mobilfunkendgerät, als Tablet-Computer, als Ultra- oder Netbook, als Notebook oder dergleichen ausgebildet sein.

Das Endgerät 10 umfasst einen Mikroprozessor 12, welcher das Endgerät 10 steuert. Verschiedene Datenkommunikationsschnittstellen des Endgeräts 10 sind nicht im Einzelnen dargestellt.

Das Endgerät 10 kann ein oder mehrere Sicherheitselemente 20, 20', 20" umfassen. Mit dem Mikroprozessor 12 ist ein Sicherheitselement 20 verbunden, welches im gezeigten Beispiel als SIM-Karte angedeutet ist. Das Sicherheitselement 20 ist entfernbar in das Endgerät 10 integriert. Alternativ oder zusätzlich und könnte beispielsweise auch ein Sicherheitselement 20' als sichere Speicherkarte oder dergleichen vorliegen. Alternativ oder zusätzlich zu einem entfernbar integrierten Sicherheitselement 20 könnte das Endgerät 10 auch mit einem fest eingebauten Sicherheitselement (nicht gezeigt) ausgestattet sein, beispielsweise einer embedded-SIM/UICC-Mobilfunkkarte, einem TPM, einem NFC-Modul oder dergleichen. Schließlich könnte auch eine sichere Ausführungsumgebung 20" innerhalb einer spezifischen Hardwarearchitektur des Endgeräts 10, beispielsweise als "Trusted Execution Environment" gemäß der "Global Platform"-Spezifikation, als Sicherheitselement 20" dienen. Eine solche sichere Ausführungsumgebung 20" wird neben der normalen Ausführungsumgebung auf dem Prozessor 12 des Endgerätes 10 bereitgestellt.

Ein Sicherheitselement 20 kann einen oder mehrere sichere Bereiche 24 umfassen. Sichere Bereiche 24 können, wie vorstehend beschrieben, "Security Domains" gemäß der "Global Platform"-Spezifikation sein. Jedem Sicherheitselement 20 ist ein TSM zugeordnet, welcher dieses Sicherheitselement 20 bzw. zumindest einen sicheren Bereich 24 des Sicherheitselements 20 verwaltet. Die sicheren Bereiche 24 sind grundsätzlich geeignet, darin in der nachstehend mit Bezug auf Fig. 3 beschriebenen Weise eine Applikation 30 zu installieren.

Das Endgerät 10 kann, wie erwähnt, eine Mehrzahl von Sicherheitselementen 20, 20', 20" umfassen. Jedes Sicherheitselement 20, 20', 20" kann zudem seinerseits eine Mehrzahl von sicheren Bereichen 24 umfassen. Unterschiedlichen Sicherheitselementen 20, 20', 20" können unterschiedliche TSMs zugeordnet sein. Ebenso können unterschiedlichen sicheren Bereichen 24, 24' unterschiedliche TSMs zugeordnet sein. In dem Sicherheitselement 20 ist daher eine Bestimmungstabelle 28 gespeichert. Diese gibt an, welcher TSM eine Installation einer vorgegebenen Applikation auf welchem Sicherheitselement 20 bzw. auf welchem sicheren Bereich 24 welches Sicherheitselements 20 durchführen kann. Weiter ist in der Tabelle 28 angegeben, mit welchem weiteren TSM ein angegebener TMS zusammenwirken kann, um eine Installation einer vorgegebenen Applikation 30 auf dem Sicherheitselement 20 bzw. dem sicheren Bereich 24 zu bewirken.

Weiter umfasst das Sicherheitselement 20 eine Annahmeeinrichtung 26 zum Empfangen einer auf dem Sicherheitselement 20 zu installierenden Applikation 30 von einer Installationseinrichtung 100, beispielsweise einem TSM. Die Annahmeeinrichtung 26 kann eingerichtet sein, verbleibende Schritte zur Installation einer empfangenen, zur Installation vorbereiteten Applikation 30 durchzuführen.

Das Sicherheitselement 20 umfasst weiterhin eine Installationsauftragserteilungseinrichtung 22. Diese ist eingerichtet, einen Installationsauftrag zum Installieren einer Applikation auf dem Sicherheitselement 20 oder auf einem von dem Sicherheitselement 20 verschiedenen weiteren Sicherheitselement 20', 20", 20"' (vgl. Fig. 3) an eine Installationseinrichtung, beispielsweise ein TSM (vgl. Fig. 3), zu richten.

Die Installationsauftragserteilungseinrichtung 22 umfasst eine erste Auftragserteilungseinrichtung 22a. Diese ist eingerichtet, einen Installationsauftrag gemäß einem ersten, internetbasierten Kommunikationsprotokoll an eine Installationseinrichtung 100 zu richten, beispielsweise über TCP/IP. Eine zweite Auftragserteilungseinrichtung 22b der Installationsauftragserteilungseinrichtung 22 ist eingerichtet, einen Installationsauftrag gemäß einem zweiten Kommunikationsprotokoll an die Installationseinrichtung 100 zu richten. Das zweite Kommunikationsprotokoll ist als ein Chipkarten-Kommunikationsprotokoll ausgebildet, beispielsweise T=0 oder T=1. Auch proprietäre Protokolle können hier zum Einsatz kommen.

Die Funktionalitäten der Installationsauftragserteilungseinrichtung 22, der Annahmeeinrichtung 26 sowie der Bestimmungstabelle 28 können den sicheren Bereichen 24 des Sicherheitselements 20 in gleicher Weise zur Verfügung stehen. Alternativ können einzelne oder alle der sicheren Bereiche 24 jeweils eigene, entsprechende Funktionalitäten aufweisen.

In Fig. 2 ist eine Installationseinrichtung 100 beispielhaft als TSM dargestellt. Diese umfasst eine Installationsauftragsannahmeeinrichtung 110 zum Entge- , gennehmen eines Installationsauftrags zur Installation einer vorgegebenen Applikation 30 auf einem vorgegebenen Sicherheitselement 20, eine Einrichtung 120 zum Durchführen oder Initiieren einer Installation einer Applikation 30 auf einem Sicherheitselement 20 und eine Installationsbearbeitungseinrichtung 130, die eingerichtet ist, einen entgegengenommenen Installationsauftrag zu bearbeiten.

Die Installationsauftragsannahmeeinrichtung 110 umfasst eine erste Auftragsannahmeeinrichtung 110a, welche eingerichtet ist, Installationsaufträge gemäß einem ersten, vorzugsweise internetbasierten Kommunikationsprotokoll entgegenzunehmen, beispielsweise über TCP/IP. Hierrüber können Installationsaufträge in herkömmlicher Weise, beispielsweise von einem Applikationsanbieter 300 oder einem Hersteller/Herausgeber 300' eines Sicherheitselements 20 entgegengenommen werden. In gleicher Weise kann diese Schnittstelle 110a nun auch dazu dienen, Installationsaufträge eines Sicherheitselements 20, welche über die erste Auftragserteilungseinrichtung 22a des Sicherheitselements 20 erteilt werden, zu empfangen.

Eine zweite Auftragsannahmeeinrichtung 110b ist eingerichtet, Installationsaufträge gemäß einem zweiten Kommunikationsprotokoll entgegenzunehmen, beispielsweise gemäß T=0 oder T=1 bzw. einem entsprechenden proprietären Protokoll. Das zweite Kommunikationsprotokoll entspricht dabei einem von einem bestimmtem Typ von Sicherheitselementen 20 bzw. deren zweiter Auftragserteilungseinrichtung 22b unterstützen zweiten Kommunikationsprotokoll.

Die Installationsbearbeitungseinrichtung 130 ist eingerichtet, einen empfangenen Installationsauftrag dahingehend zu prüfen, ob dieser Auftrag von der Installationseinrichtung 100 ohne Zusammenwirken mit einer weiteren Installationseinrichtung 100', 100" ausgeführt werden kann. Im Rahmen einer solchen Prüfung prüft die Bearbeitungseinrichtung 130 beispielsweise, ob ein von dem Sicherheitselement 20 unterstütztes, gegebenenfalls proprietäres Kommunikationsprotokoll bekannt ist, ob generell eine Installationsberechtigung, insbesondere notwendige kryptographische Schlüssel, vorliegt, und dergleichen mehr.

Verläuft die Prüfung positiv, so wird der Installationsauftrag zur weiteren Ausführung an die Einrichtung 120 weitergegeben, welche die Installation der Applikation durchführt oder initiiert.

Erkennt die Bearbeitungseinrichtung 130 allerdings im Rahmen der Prüfung, dass ein Zusammenwirken mit einer weiteren Installationseinrichtung 100', 100" zum Durchführen des Installationsauftrags notwendig ist, ermittelt die Bearbeitungseinrichtung 130 mittels der Bestimmungseinrichtung 140 eine entsprechende weitere Installationseinrichtung 100', 100", welche geeignet ist, im Zusammenhang mit dem Installationsauftrag mit der Installationseinrichtung 100 zusammenzuwirken.

Die Installationsberechtigungsanforderungseinrichtung 150, welche ebenfalls Teil der Bearbeitungseinrichtung 130 ist, ist eingerichtet, zum Durchführen des entgegengenommenen Installationsauftrags bei der zuvor bestimmten, weiteren Installationseinrichtung 100', 100" eine Installationsberechtigung anzufordern, insbesondere zur Installation notwendige kryptographische Schlüssel.

In dem Fall, dass die Bearbeitungseinrichtung 130 in Kombination mit der Bestimmungseinrichtung 140 im Rahmen der Prüfung des Installationsauftrags zu dem Schluss gelangt, dass eine weitere, bestimmte Installationseinrichtung 100' eingerichtet und in der Lage ist, den Installationsauftrag auszuführen, so kann die Bearbeitungseinrichtung 130 den Auftrag über die Weiterleitungseinrichtung 160 an die weitere Installationseinrichtung 100' weiterleiten.

Vorzugsweise unterstützt auch die Weiterleitungseinrichtung 160 die beiden Kommunikationsprotokolle, über die die Installationsauftragsannahmeeinrichtung 110 der Installationseinrichtung 100 Installationsaufträge annehmen kann. Auf diese Weise kann die Weiterleitungseinrichtung 160, mittels der ersten 160a bzw. zweiten Schnittstelle 160b, den Auftrag in unveränderter Form weitergeben, d.h. insbesondere mittels des gleichen Protokolls, gemäß welchem die Installationseinrichtung 100 den Installationsauftrag empfangen hat. Es kann daher für die weitere Installationseinrichtung 100' transparent bleiben, dass der Auftrag nicht unmittelbar von einem Sicherheitselement 20, sondern über die Installationseinrichtung 100 empfangen wird. Es ist jedoch auch möglich, dass die Weiterleitungseinrichtung 160 beim Weiterleiten das Protokoll ändert. D.h. die Weiterleitungseinrichtung 160 kann beispielsweise einen über das zweite Chipkarten-Kommunikationsprotokoll von der Installationseinrichtung 100 empfangenen Installationsauftrag über das erste, internetbasierte Kommunikationsprotokoll an eine weitere Installationseinrichtung weiterleiten - oder umgekehrt.

Mit Bezug auf Fig. 3 werden exemplarisch einzelne Schritte zweier bevorzugter Ausführungsformen eines Verfahrens zum Installieren einer Applikation 30 in einem Sicherheitselement 20 eines portablen Endgeräts 10 illustriert. Das Verfahren wird dabei innerhalb eines Systems durchgeführt, welches eine Mehrzahl von Installationseinrichtungen TSM1, TSM2, TSM3 sowie eine Mehrzahl von Endgeräten 10,10' aufweist. Jedes dieser Endgeräte umfasst, wie erwähnt, zumindest ein Sicherheitselement 20, 20', 20", 20"'.

Ein optionaler zentraler Server 200 kann Informationen darüber umfassen, welche Installationseinrichtung 100, 100', 100" alleine oder in Zusammenwirkung mit welcher weiteren Installationseinrichtung 100, 100', 100" zum Verwalten eines vorgegebenen Sicherheitselements 20 geeignet ist. Auf den Server 200 können in der Regel sämtliche Installationseinrichtungen 100, 100', 100" des Systems zugreifen.

Im Rahmen einer ersten Ausführungsform des Verfahrens soll eine Applikation 30, welche durch einen Applikationsprovider 300 bereitgestellt wird, auf dem Sicherheitselement 20 des Endgeräts 10 installiert werden. Auf herkömmliche Weise würde sich der Applikationsanbieter 300 dazu an den TSM1100 wenden (vgl. Schritt S1') und einen entsprechenden Installationsauftrag über die erste Auftragsannahmeeinrichtung 110a an diesen richten. Falls jedoch dem Applikationsanbieter 300 nicht bekannt ist, welcher TSM 100 das Sicherheitselement 20 verwaltet, so kann alternativ, gemäß dem erfindungsgemäßen Verfahren, ein anderer Weg eingeschlagen werden.

In Schritt S1 überträgt der Applikationsanbieter 300 die Applikation 30, in nicht installationsfähiger Form und in der Regel ohne Installationsberechtigung, an das Endgerät 10. Das Endgerät 10 umfasst dabei das Sicherheitselement 20, in welchem die Applikation 30 installiert werden soll. Das Endgerät 10 leitet die Applikation 30 an das Sicherheitselement 20 weiter.

In Schritt S2 bestimmt das Sicherheitselement 20 anhand seiner Bestimmungstabelle 28, dass die Installationseinrichtung 100, d.h. der TSM1, geeignet ist, die Installation der Applikation 30 in dem Sicherheitselement 20 vorzunehmen.

In Schritt S3 sendet das Sicherheitselement 20, mittels der ersten Auftragserteilungseinrichtung 22a der Installationsauftragserteilungseinrichtung 22 gemäß dem ersten, internetbasierten Standardkommunikationsprotokoll einen entsprechenden Installationsauftrag an den TSM1. Der Auftrag wird dort über die erste Auftragsannahmeeinrichtung 110a der Installationsauftragsannahmeeinrichtung 110 entgegengenommen. Aufgrund der Tatsache, dass der TSM1 den Auftrag über die Standardauftragsannahmeschnittstelle 110a empfangen hat, erscheint dieser Auftrag dem TSM1 100 wie ein entsprechender, in herkömmlicher Weise vom Applikationsanbieter 300 empfangener Auftrag.

In Schritt S4 prüft die Bearbeitungseinrichtung 130 des TSM1 100 den Auftrag und erkennt, dass zum Durchführen desselben keine Zusammenwirkung mit einem weiteren TSM 100', 100" notwendig ist. Die Bearbeitungseinrichtung 130 gibt den Installationsauftrag an die Einrichtung 120, welche schließlich in Schritt S5 eine Installation der Applikation 30 in dem Sicherheitselement 20 durchführt.

Der vom Sicherheitselement 20 beauftragte Installationsauftrag könnte auch fordern, dass die Applikation 30 alternativ oder zusätzlich auf dem weiteren Sicherheitselement 20', 20" des Endgeräts 10 oder gar auf einem Sicherheitselement 20‴ eines von dem Endgerät 10 verschiedenen Endgeräts 10' installiert werden soll.

Mit Bezug auf die Schritte T1 bis T6 ist eine weitere Ausführungsform des Verfahrens illustriert.

Hier wendet sich das Sicherheitselement 20‴, welches in das Endgerät 10' integriert ist, in Schritt T1 mit dem Auftrag an den TSM2, eine Applikation 30, welche in dem Sicherheitselement 20‴ bereits in Form eines durch eine Virtuelle Maschine interpretierbaren Programmcodes vorliegt, in Form von an das Sicherheitselement 20‴ angepassten Maschinencodes bereitzustellen und in dem Sicherheitselement 20‴ zu installieren. Der Installationsauftrag umfasst dazu zusätzlich die notwendigen Informationen hinsichtlich der Hard- und Softwareausstattung des Sicherheitselements 20‴. Alternativ können diese Informationen nach Empfangen des Installationsauftrags durch die Installationseinrichtung 100' von dem Sicherheitselement 20‴ erfragt werden. Das Sicherheitselement 20‴ richtet hier den Auftrag mittels der zweiten Auftragserteilungseinrichtung 22b gemäß einem Chipkarten-Kommunikationsprotokoll an die zweite Auftragsannahmeeinrichtung 110'b des TSM2 100'.

Die Bearbeitungseinrichtung des TSM2 100' prüft den Auftrag in Schritt T2 und bestimmt in Schritt T3 durch eine Nachfrage beim Server 200, dass der TSM3 100" die notwendigen Compiler- und Linkerfunktionalitäten umfasst, um einen entsprechenden, an das Sicherheitselement 20‴ angepassten Maschinencode zur Applikation 30 zu erzeugen.

Dementsprechend leitet der TSM2 100' den Installationsauftrag in Schritt T4 unverändert mittels der Weiterleitungsschnittstelle 160'b an den TSM 3 100" weiter, welcher den Auftrag über die zweite Auftragsannahmeeinrichtung 110"b entgegennimmt.

Eine erneute Prüfung des Auftrags durch den TSM3 100" in Schritt T5 ergibt, dass der TSM3 100" den Auftrag ausführen kann. Der Maschinencode wird erzeugt und die angepasste Applikation 30 in Schritt T6 mittels der Einrichtung 120" in dem Sicherheitselement 20‴ installiert.

Alternativ hätte der TSM3 100" den Maschinencode auch an den TSM2 100' weiterleiten können, beispielsweise in Form eines modifizierten Installationsauftrags über das internetbasierte erste Kommunikationsprotokoll, wie dies strichliniert mit Bezug auf Schritt T6' angedeutet ist. In diesem Fall hätte die Installation der Applikation 30 in Maschinencode, wie mit Schritt T7' ebenfalls strichliniert angedeutet, durch die Einrichtung 120' der Installationseinrichtung 100' durchgeführt werden können.

## Patentansprüche

1. Verfahren zum Durchführen oder Initiieren der Installation einer Applikation (30) in einem Sicherheitselement (20; 20‴) eines portablen Endgeräts (10), umfassend die Schritte:
- Empfangen (S3; T1) eines Installationsauftrags durch eine Installationseinrichtung (100; 100') zum Installieren der Applikation (30) auf einem Sicherheitselement (20; 20‴);
- Bearbeiten (S4; T2, T3, T4, T5) des Installationsauftrags durch die Installationseinrichtung (100; 100');
**dadurch gekennzeichnet, dass**
die Installationseinrichtung (100;100') den Installationsauftrag von dem Sicherheitselement (20; 20‴) empfängt und im Schritt des Bearbeitens (T2, T3, T4, T5) des Installationsauftrags in Abhängigkeit von notwendigen Compiler- und Linkerfunktionalitäten mit einer weiteren Installationseinrichtung (100") zusammenwirkt,
indem die Installationseinrichtung (100, 100') in Abhängigkeit von notwendigen Compiler- und Linkerfunktionalitäten den Installationsauftrag im Schritt des Bearbeiters (T2, T3, T4, T5) an die weitere Installationseinrichtung (100") weiterleitet (T4), welche einen entsprechenden, an das Sicherheitselement (20; 20‴) angepassten Maschinencode zur Applikation erzeugt und in dem Sicherheitselement installiert.

2. Verfahren nach Anspruch 1, **dadurch gekennzeichnet, dass** die Installationseinrichtung (100') im Schritt des Bearbeitens (T2, T3, T4, T5) eine Installationsberechtigung zum Durchführen des Installationsauftrags bei der weiteren Installationseinrichtung anfordert.

3. Verfahren nach Anspruch 2, **dadurch gekennzeichnet, dass** die Installationseinrichtung (100') eine zum Zusammenwirken im Schritt des Bearbeitens (T2, T3, T4, T5) geeignete weitere Installationseinrichtung (100") bestimmt (T3).

4. Verfahren nach einem der Ansprüche 1 bis 3, **dadurch gekennzeichnet, dass** die Installationseinrichtung (100') den Installationsauftrag im Schritt des Bearbeitens (T2, T3, T4, T5) hinsichtlich einer Ausführbarkeit ohne ein Zusammenwirken mit einer weiteren Installationseinrichtung prüft (T2).

5. Verfahren nach einem der Ansprüche 1 bis 4, **dadurch gekennzeichnet, dass** die Installationseinrichtung (100; 100'; 100") einen weiteren Installationsauftrag (S1') von einem Hersteller des Sicherheitselements oder einem Herausgeber des Sicherheitselements (300') oder einem berechtigten Dritten (300) empfängt.

6. Verfahren nach einem der Ansprüche 1 bis 5, **dadurch gekennzeichnet, dass** die Installationseinrichtung (100) den Installationsauftrag und/oder den weiteren Installationsauftrag gemäß einem ersten, vorzugsweise internetbasierten Kommunikationsprotokoll entgegennimmt (S3) und/oder dass die Installationseinrichtung (100') den Installationsauftrag und/oder den weiteren Installationsauftrag gemäß einem von dem ersten Kommunikationsprotokoll verschiedenen zweiten Kommunikationsprotokoll entgegennimmt (T1).

7. Verfahren nach Anspruch 6, wobei das zweite Kommunikationsprotokoll als ein Chipkarten-Kommunikationsprotokoll ausgebildet ist.

8. Installationseinrichtung (100; 100'; 100") zum Durchführen oder Initiieren der Installation einer Applikation (30) auf einem Sicherheitselement (20; 20'; 20"; 20"') eines portablen Endgeräts (10), umfassend:
- eine Installationsauftragsannahmeeinrichtung (110) zum Entgegennehmen eines Installationsauftrags zur Installation einer vorgegebenen Applikation (30) auf einem vorgegebenen Sicherheitselement (20; 20'; 20"; 20"');
- eine Einrichtung (120) zum Durchführen oder Initiieren einer Installation einer Applikation (30) auf einem Sicherheitselement (20; 20'; 20"; 20"') und
- eine Installationsbearbeitungseinrichtung (130), die eingerichtet ist, einen entgegengenommenen Installationsauftrag zu bearbeiten,
**dadurch gekennzeichnet, dass**
die Installationsauftragsannahmeeinrichtung (110) eingerichtet ist, den Installationsauftrag von dem Sicherheitselement (20; 20"')zu empfangen und im Schritt des Bearbeiters (T2, T3, T4, T5) des Installationsauftrags mit einer weiteren Installationseinrichtung (100") zusammenzuwirken,
indem die Installationseinrichtung (100, 100') in Abhängigkeit von notwendigen Compiler- und Linkerfunktionalitäten den Installationsauftrag im Schritt des Bearbeiters (T2, T3, T4, T5) an die weitere Installationseinrichtung (100") weiterleitet (T4), welche einen entsprechenden, an das Sicherheitselement (20; 20"') angepassten Maschinencode zur Applikation erzeugt und in dem Sicherheitselement installiert.

9. Installationseinrichtung (100) nach Anspruch 8, **dadurch gekennzeichnet, dass** die Installationsauftragsannahmeeinrichtung (110) eine erste Auftragsannahmeeinrichtung (110a) umfasst, welche eingerichtet ist, Installationsaufträge gemäß einem ersten, vorzugsweise internetbasierten Kommunikationsprotokoll entgegenzunehmen, und
dass die Installationsauftragsannahmeeinrichtung (110) eine zweite Auftragsannahmeeinrichtung (110b) umfasst, welche eingerichtet ist, Installationsaufträge gemäß einem von dem ersten Kommunikationsprotokoll verschiedenen zweiten Kommunikationsprotokoll entgegenzunehmen, wobei das zweite Kommunikationsprotokoll vorzugsweise als ein Chipkarten-Kommunikationsprotokoll ausgebildet ist.

10. Installationseinrichtung (100) nach Anspruch 8 oder 9, **dadurch gekennzeichnet, dass** die Installationsbearbeitungseinrichtung (130) eine Installationsberechtigungsanforderungseinrichtung (150) umfasst, welche eingerichtet ist, zum Durchführen des entgegengenommenen Installationsauftrags bei der weiteren Installationseinrichtung (100'; 100") eine Installationsberechtigung anzufordern.

11. Installationseinrichtung (100) nach einem der Ansprüche 8 bis 10, **dadurch gekennzeichnet, dass** die Installationsbearbeitungseinrichtung (130) eine Bestimmungseinrichtung (140) umfasst, die eingerichtet ist, eine zum Zusammenwirken beim Bearbeiten geeignete weitere Installationseinrichtung (100'; 100") zu bestimmen.

## Claims

1. A method for executing or initiating the installation of an application (30) in a security element (20; 20‴) of a portable end device (10), comprising the steps of:
- receiving (S3; T1) an installation job by an installation device (100; 100') for installing the application (30) on a security element (20; 20‴);
- processing (S4; T2, T3, T4, T5) the installation job by the installation device (100; 100');
**characterized in that**
the installation device (100; 100') receives the installation job from the security element (20; 20‴) and interacts in dependence on required compiler and linker functionalities with a further installation device (100") in the step of processing (T2, T3, T4, T5) the installation job,
by the installation device (100, 100') relaying (T4) the installation job in dependence on required compiler and linker functionalities to the further installation device (100") in the processing step (T2, T3, T3, T5), said further installation device producing a corresponding machine code relating to the application that is adapted to the security element (20; 20‴) and installs it in the security element.

2. The method according to claim 1, **characterized in that** the installation device (100') requests an installation authorization for carrying out the installation job from the further installation device in the processing step (T2, T3, T4, T5).

3. The method according to claim 2, **characterized in that** the installation device (100') determines (T3) a further installation device (100") suitable for interaction in the processing step (T2, T3, T4, T5).

4. The method according to any of claims 1 to 3, **characterized in that** the installation device (100') checks (T2) the installation job in the processing step (T2, T3, T4, T5) with regard to an executability without an interaction with a further installation device.

5. The method according to any of claims 1 to 4, **characterized in that** the installation device (100; 100'; 100") receives a further installation job (S1') from a manufacturer of the security element or an issuer of the security element (300') or an authorized third party (300).

6. The method according to any of claims 1 to 5, **characterized in that** the installation device (100) accepts (S3) the installation job and/or the further installation job according to a first, preferably Internet-based communication protocol, and/or that the installation device (100') accepts (T1) the installation job and/or the further installation job according to a second communication protocol different from the first communication protocol.

7. The method according to claim 6, wherein the second communication protocol is formed as a chip card communication protocol.

8. An installation device (100; 100'; 100") for executing or initiating the installation of an application (30) on a security element (20; 20'; 20"; 20‴) of a portable end device (10), comprising:
- an installation job accepting device (110) for accepting an installation job for installing a pre-specified application (30) on a pre-specified security element (20; 20'; 20"; 20‴);
- a device (120) for carrying out or initiating an installation of an application (30) on a security element (20; 20'; 20"; 20‴), and
- an installation processing device (130) which is arranged to process an accepted installation job,
**characterized in that**
the installation job accepting device (110) is arranged to receive the installation job from the security element (20; 20‴) and to interact with a further installation device (100") in the step of processing (T2, T3, T4, T5) the installation job,
by the installation device (100, 100') relaying (T4) the installation job in dependence on required compiler and linker functionalities to the further installation device (100") in the processing step (T2, T3, T3, T5), said further installation device producing a corresponding machine code relating to the application that is adapted to the security element (20; 20‴) and installs it in the security element.

9. The installation device (100) according to claim 8, **characterized in that** the installation job accepting device (110) comprises a first job accepting device (110a) which is arranged to accept installation jobs according to a first, preferably Internet-based communication protocol, and that the installation job accepting device (110) comprises a second job accepting device (110b) which is arranged to accept installation jobs according to a second communication protocol different from the first communication protocol, wherein the second communication protocol is preferably formed as a chip card communication protocol.

10. The installation device (100) according to claim 8 or 9, **characterized in that** the installation processing device (130) comprises an installation authorization requesting device (150) which is arranged to request an installation authorization from the further installation device (100'; 100"), for carrying out the accepted installation job.

11. The installation device (100) according to any of claims 8 to 10, **characterized in that** the installation processing device (130) comprises a determining device (140) which is arranged to determine a further installation device (100'; 100") suitable for interaction upon processing.

## Revendications

1. Procédé d'exécution ou de lancement de l'installation d'une application (30) dans un élément de sécurité (20; 20‴) d'un terminal portable (10), comprenant les étapes :
- réception (S3; T1) d'un ordre d'installation par un équipement d'installation (100; 100') pour l'installation de l'application (30) sur un élément de sécurité (20; 20‴) ;
- traitement (S4; T2, T3, T4, T5) de l'ordre d'installation par l'équipement d'installation (100; 100') ;
**caractérisé en ce que**
l'équipement d'installation (100; 100') reçoit l'ordre d'installation de la part de l'élément de sécurité (20; 20‴) et, à l'étape du traitement (T2, T3, T4, T5) de l'ordre d'installation, co-agit avec un autre équipement d'installation (100") en fonction de fonctionnalités nécessaires de compilateur et de linker.
ce qui a lieu **en ce que** l'équipement d'installation (100; 100'), en fonction de fonctionnalités nécessaires de compilateur et de linker, transfère (T4) à l'étape du traitement (T2, T3, T4, T5) l'ordre d'installation à l'autre équipement d'installation (100"), lequel génère pour l'application un code machine correspondant adapté à l'élément de sécurité (20; 20‴) et l'installe dans l'élément de sécurité.

2. Procédé selon la revendication 1, **caractérisé en ce que** l'équipement d'installation (100'), à l'étape du traitement (T2, T3, T4, T5), sollicite auprès de l'autre équipement d'installation une autorisation d'installation pour l'exécution de l'ordre d'installation.

3. Procédé selon la revendication 2, **caractérisé en ce que** l'équipement d'installation (100') détermine (T3) un autre équipement d'installation (100") adapté au co-agissement à l'étape du traitement (T2, T3, T4, T5).

4. Procédé selon une des revendications de 1 à 3**, caractérisé en ce que** l'équipement d'installation (100') examine (T2) l'ordre l'installation à l'étape du traitement (T2, T3, T4, T5) quant à une exécutabilité sans co-agissement avec un autre équipement d'installation.

5. Procédé selon une des revendications de 1 à 4, **caractérisé en ce que** l'équipement d'installation (100; 100'; 100") reçoit un autre ordre d'installation (S1') de la part d'un fabricant de l'élément de sécurité ou d'un émetteur de l'élément de sécurité (300') ou d'un tiers (300) habilité.

6. Procédé selon une des revendications de 1 à 5, **caractérisé en ce que** l'équipement d'installation (100) réceptionne (S3) l'ordre d'installation et/ou l'autre ordre d'installation suivant un premier protocole de communication, de préférence basé sur Internet, et/ou que l'équipement d'installation (100') réceptionne (T1) l'ordre d'installation et/ou l'autre ordre d'installation suivant un deuxième protocole de communication différent du premier protocole de communication.

7. Procédé selon la revendication 6, cependant que le deuxième protocole de communication est conçu en tant que protocole de communication à carte à puce.

8. Equipement d'installation (100; 100'; 100") destiné à l'exécution ou au lancement de l'installation d'une application (30) dans un élément de sécurité (20; 20'; 20"; 20‴) d'un terminal portable (10), comprenant :
- un équipement de réception d'ordre d'installation (110) pour le réceptionnement d'un ordre d'installation aux fins de l'installation d'une application (30) prédéterminée sur un élément de sécurité prédéterminé (20; 20'; 20"; 20‴) ;
- un équipement (120) pour l'exécution ou de lancement d'une installation d'une application (30) sur un élément de sécurité prédéterminé (20; 20'; 20"; 20‴), et
- un équipement de traitement d'installation (130) configuré pour traiter un ordre d'installation réceptionné,
**caractérisé en ce que**
l'équipement de réception d'ordre d'installation (110) est configuré pour recevoir l'ordre d'installation de la part de l'élément de sécurité (20; 20‴) et pour co-agir, à l'étape du traitement (T2, T3, T4, T5) de l'ordre d'installation, avec un autre équipement d'installation (100"),
ce qui a lieu **en ce que** l'équipement d'installation (100; 100'), en fonction de fonctionnalités nécessaires de compilateur et de linker, transfère (T4) à l'étape du traitement (T2, T3, T4, T5) l'ordre d'installation à l'autre équipement d'installation (100"), lequel génère pour l'application un code machine correspondant adapté à l'élément de sécurité (20; 20‴) et l'installe dans l'élément de sécurité.

9. Equipement d'installation (100) selon la revendication 8, **caractérisé en ce que** l'équipement de réception d'ordre d'installation (110) comprend un premier équipement de réception d'ordre (110a) configuré pour réceptionner des ordres d'installation suivant un premier protocole de communication, de préférence basé sur Internet, et
que l'équipement de réception d'ordre d'installation (110) comprend un deuxième équipement de réception (110b) d'ordre configuré pour réceptionner des ordres d'installation suivant un deuxième protocole de communication différent du premier protocole de communication, cependant que le deuxième protocole de communication est de préférence conçu en tant que protocole de communication à carte à puce.

10. Equipement d'installation (100) selon la revendication 8 ou 9, **caractérisé en ce que** l'équipement de traitement d'installation (130) comprend un équipement de sollicitation d'autorisation d'installation (150) configuré pour, aux fins de l'exécution de l'ordre d'installation réceptionné, solliciter auprès de l'autre équipement d'installation (100'; 100") une autorisation d'installation.

11. Equipement d'installation (100) selon une des revendications de 8 à 10, **caractérisé en ce que** l'équipement de traitement d'installation (130) comprend un équipement de détermination (140) configuré pour déterminer un autre équipement d'installation (100'; 100") adapté au co-agissement lors du traitement.
